# EUROPEAN PATENT APPLICATION

(11) **EP 4 440 179 A1**
(43) Date of publication of application: **02.10.2024**
(21) Application number: 22897459.8
(22) Date of filing: 18.10.2022
(51) Int. Cl.: H04W 24/02, H04W 16/10, H04W 88/08

(54) **METHOD AND APPARATUS FOR REDUCING INTER-CELL INTERFERENCE**

(30) Priority: 26.11.2021 CN 202111425004
(71) Applicant: ZTE Corporation, Shenzhen, Guangdong 518057 (CN)
(72) Inventor: LONG, Guohui, Shenzhen, Guangdong 518057 (CN); TENG, Wei, Shenzhen, Guangdong 518057 (CN); XIN, Qin, Shenzhen, Guangdong 518057 (CN)
(74) Representative: Pennacchio, Salvatore Giovanni
(86) International application number: PCT/CN2022/125912
(87) International publication number: WO 2023/093376

(57) **Abstract**

A method and apparatus for reducing inter-cell interference are provided. The method includes: selecting, in a cell, multiple radio frequency units within a predetermined range of a location of a User Equipment (UE); and sending service channel data only on the multiple radio frequency units when scheduling the UE. By means of the embodiments of the present disclosure, data is sent only to radio frequency units which are located near a user and selected according to a location of the user in a cell, and data is not sent to other radio frequency units in the cell, so that inter-cell interference may be reduced.

## Description

### Technical Field

Embodiments of the present disclosure relate to the field of communications, and in particular, to a method and apparatus for reducing inter-cell interference.

### Background

The overall architecture of an active indoor distribution system is divided into three levels: a base band unit, an aggregation unit, and a radio frequency unit.

For the coverage of the active indoor distribution system, a cell is composed of multiple Radio Frequency (RF) units. For example, in a scenario that a cell covers a large shopping mall, 16 remote radio units (e.g., Pico Remote Radio Units (pRRUs)) are provided in the cell, with each pRRU covering approximately 500 square meters, so that the 16 pRRUs may provide coverage for around 9,000 square meters.

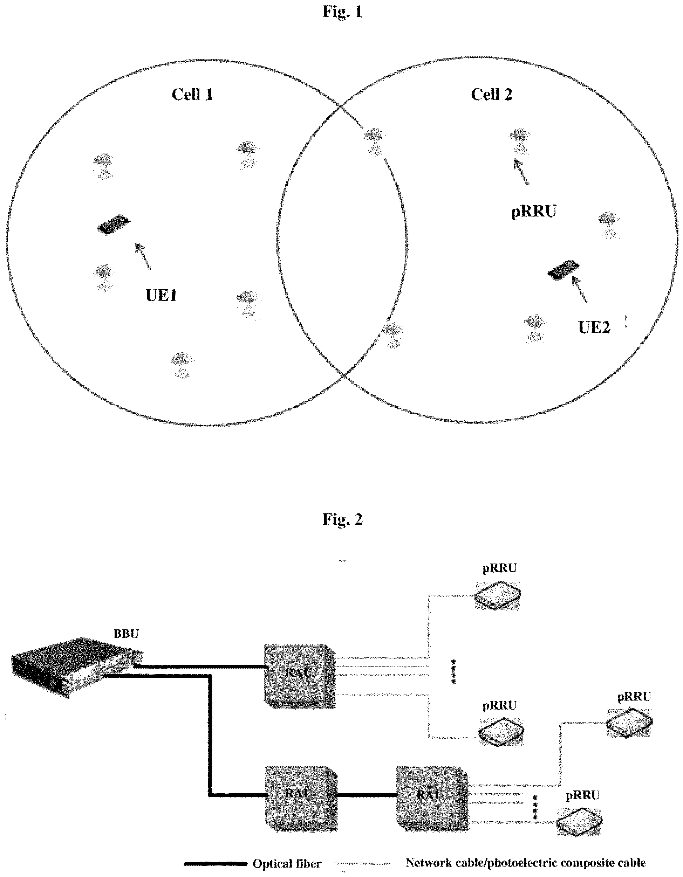

The interference in multi-cell networking of active indoor distribution system is tested. Fig. 1 shows a networking diagram. As shown in Fig. 1, Cell 1 and Cell 2 are adjacent cells. When User Equipment 1 (UE1) is downloading data in Cell 1, if User Equipment 2 (UE2) in the adjacent cell is also downloading data, the download speed of UE1 will be reduced. In the related art, a service channel, for example, a Physical Downlink Shared Channel (PDSCH) is transmitted by all pRRUs in the active indoor distribution system. For example, when a user in the cell is downloading data, all pRRUs in the cell will send data on the time-frequency resources allocated to that user. This will increase interference to adjacent cells, resulting in a decrease in user experience in a multi-cell networking scenario.

### Summary

Embodiments of the present disclosure provide a method and apparatus for reducing inter-cell interference, which may at least solve the problem of a decrease in user experience caused by interference on a service channel between adjacent cells.

According to some embodiments of the present disclosure, provided is a method for reducing inter-cell interference, including: selecting, in a cell, multiple radio frequency units within a predetermined range of a location of a User Equipment (UE); and sending service channel data only on the multiple radio frequency units when scheduling the UE.

According to some other embodiments of the present disclosure, also provided is an apparatus for reducing inter-cell interference, including: a selecting module, configured to select, in a cell, multiple radio frequency units within a predetermined range of a location of a User Equipment (UE); and a sending module, configured to send service channel data only on the multiple radio frequency units when scheduling the UE.

According to yet another embodiment of the present disclosure, also provided is a computer-readable storage medium. The computer-readable storage medium stores a computer program, and the computer program, when being executed by a processor, causes the processor to implement the operations of any one of the method embodiments.

According to yet another embodiment of the present disclosure, also provided is an electronic apparatus, including a memory, a processor, and a computer program stored on the memory and executable on the processor, wherein the processor, when executing the computer program, implements the operations of any one of the method embodiments.

### Brief Description of the Drawings

Fig. 1 is a schematic diagram of networking in the related art;
Fig. 2 is a hardware architecture diagram of a method and apparatus for reducing inter-cell interference according to some embodiments of the present disclosure;
Fig. 3 is a flowchart of a method for reducing inter-cell interference according to some embodiments of the present disclosure;
Fig. 4 is a structural block diagram of an apparatus for reducing inter-cell interference according to some embodiments of the present disclosure;
Fig. 5 is a structure diagram of an apparatus for reducing inter-cell interference according to some other embodiments of the present disclosure;
Fig. 6 is a structure diagram of an apparatus for reducing inter-cell interference according to some other embodiments of the present disclosure;
Fig. 7 is a system architecture diagram of an active indoor distribution system for reducing multi-cell interference according to some embodiments of the present disclosure;
Fig. 8 is a flowchart of a method for reducing inter-cell interference according to some other embodiments of the present disclosure; and
Fig. 9 is a schematic structural diagram of composition of a number of a pRRU according to some embodiments of the present disclosure.

### Detailed Description

Hereinafter, the embodiments of the present disclosure will be described in detail with reference to the accompanying drawings and in conjunction with the embodiments.

It should be noted that, terms such as "first" and "second" in the description, claims, and the accompanying drawings of the present disclosure are used to distinguish similar objects, but are not necessarily used to describe a specific sequence or order.

The embodiments of the present disclosure may run on the hardware architecture shown in Fig. 2. As shown in Fig. 2, the hardware architecture includes: a Baseband Unit Box (BBU), a remote aggregation unit (e.g., a pico-Bridge (pBridge)) and a remote radio unit (e.g., a pico-Remote Radio Unit (pRRU)). An optical network switching board (FS) of the BBU is connected to the pBridge through an optical fiber, and the pBridge is connected to the pRRU through a network cable or a photoelectric composite cable.

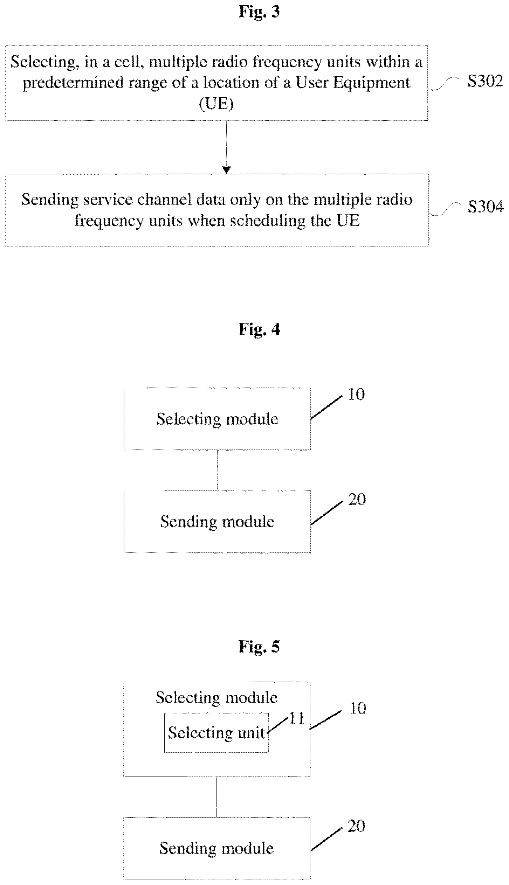

Provided in the present embodiment is a method for reducing inter-cell interference operating in the described hardware architecture. Fig. 3 is a flowchart of a method for reducing inter-cell interference according to some embodiments of the present disclosure. As shown in Fig. 3, the flow includes the following operations S302 to S304.

In operation S302, multiple radio frequency units within a predetermined range of a location of a User Equipment (UE) are selected in a cell.

In operation S304, service channel data is sent only on the multiple radio frequency units when scheduling the UE.

The operation S302 of this embodiment may further include: the multiple radio frequency units within the predetermined range of the location of the UE may be selected in the cell according to a strength of a channel sounding reference signal sent by the UE.

In this embodiment, the operation that the multiple radio frequency units within the predetermined range of the location of the UE are selected in the cell according to a strength of a channel sounding reference signal sent by the UE may further include: the strengths of the channel sounding reference signal sent by the UE at respective radio frequency units in the cell where the UE is located are acquired; and the multiple radio frequency units are selected from the respective the radio frequency units based on the strengths of the channel sounding reference signal at the respective radio frequency units, wherein a difference between the strength of the channel sounding reference signal at each of the multiple radio frequency units and a strongest strength of the channel sounding reference signal as acquired satisfies a preset threshold.

Before the operation S302 of this embodiment, the method may further include: the respective radio frequency units in the cell are uniformly numbered according to a networking condition of the cell where the UE is located, wherein a number of each of the respective radio frequency units is composed of a cell number segment, a cell part number segment, an aggregation unit number segment, and a radio frequency unit number segment.

In this embodiment, the cell may be an ordinary cell or a super cell, and when the cell is the ordinary cell, a value of the cell part number segments is equal to 0.

In this embodiment, the operation of selecting, from the respective the radio frequency units, the multiple radio frequency units includes: the strengths of the channel sounding reference signal at the respective radio frequency units are ranked in a descending order; the number of a radio frequency unit with the strongest strength of the channel sounding reference signal is recorded and put into a radio frequency unit list for sending the service channel data when scheduling the UE; and the strongest strength of the channel sounding reference signal is compared with the strength of the channel sounding reference signal at each radio frequency unit other than the radio frequency unit with the strongest strength of the channel sounding reference signal; and when the difference between the strongest strength of the channel sounding reference signal and the strength of the channel sounding reference signal at the radio frequency unit satisfies the preset threshold, the number of the radio frequency unit satisfying the preset threshold is recorded and put into the radio frequency unit list for sending the service channel data when scheduling the UE.

In this embodiment, the operation of sending service channel data only on the multiple radio frequency units when scheduling the UE includes: when scheduling the UE, i.e., when allocating communication resources for the UE according to a scheduling policy, the service channel data is copied, and the service channel data is sent only on the radio frequency units whose numbers are in the radio frequency unit list for sending the service channel data.

By means of the described operations, according to a location of a user in a cell, data is sent only on pRRU(s) near the user, and other pRRUs in the cell do not send data, so that inter-cell interference may be reduced, and the communication rate of the user may be greatly improved. The technical solution in the embodiments of the present disclosure solves the problem of a decrease in user experience caused by interference on a service channel between adjacent cells, and improves the user experience during user communication.

Through the description of the foregoing embodiments, a person having ordinary skill in the art may clearly understand that the method according to the foregoing embodiments may be implemented by software in addition to a necessary universal hardware platform, and definitely may also be implemented by hardware. However, in many cases, the former is a preferred implementation. Based on such understanding, the essence of the technical solutions of the embodiments of the present disclosure or the part contributing to the related art may be embodied in the form of a software product. The computer software product may stored in a storage medium (such as a Read-Only Memory (ROM)/Random Access Memory (RAM)), a magnetic disk, and an optical disk) storing several instructions for instructing a terminal device (which may be a mobile phone or a computer, a server, a network device, or the like) to perform the method described in the embodiments of the present disclosure.

An apparatus for reducing inter-cell interference is also provided in the embodiments. The apparatus is used for implementing the described embodiments and exemplary implementations, and what has been described will not be elaborated. The term "module", as used hereinafter, is a combination of software and/or hardware capable of realizing a predetermined function. Although the apparatus described in the following embodiments is preferably implemented by software, implementation of hardware or a combination of software and hardware is also possible and conceived.

Fig. 4 is a structural block diagram of an apparatus for reducing inter-cell interference according to some embodiments of the present disclosure. As shown in Fig. 4, the apparatus includes:
a selecting module 10, configured to select, in a cell, multiple radio frequency units within a predetermined range of a location of a User Equipment (UE); and
a sending module 20, configured to send service channel data only on the multiple radio frequency units when scheduling the UE.

Fig. 5 is a structure diagram of an apparatus for reducing inter-cell interference according to some other embodiments of the present disclosure. As shown in Fig. 5, the apparatus includes all the modules shown in Fig. 4, and the selecting module 10 includes:
a selecting unit 11, configured to select, in the cell according to a strength of a channel sounding reference signal sent by the UE, the multiple radio frequency units within the predetermined range of the location of the UE.

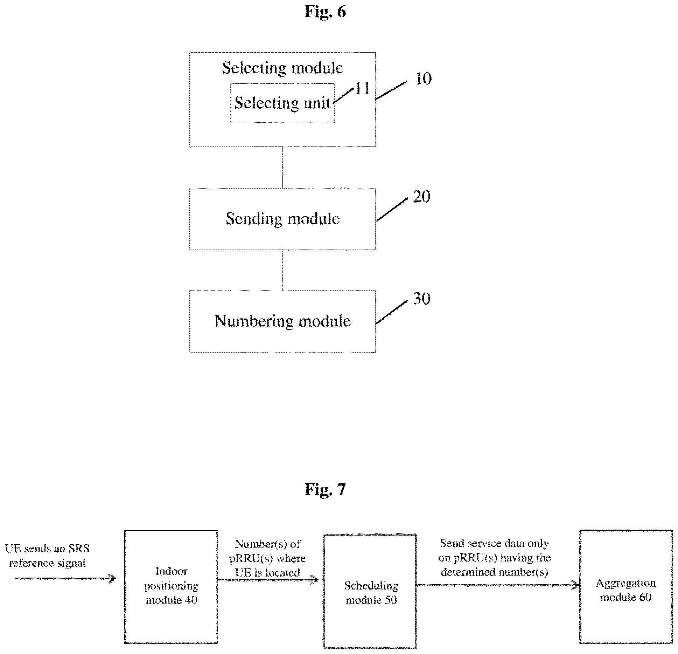

Fig. 6 is a structure diagram of an apparatus for reducing inter-cell interference according to some other embodiments of the present disclosure. As shown in Fig. 6, in addition to all the modules shown in Fig. 5, the apparatus further includes:
a numbering module 30, configured to uniformly number respective radio frequency units in the cell according to a networking condition of the cell where the UE is located, wherein a number of each of the respective radio frequency units is composed of a cell number segment, a cell part number segment, an aggregation unit number segment, and a radio frequency unit number segment.

It should be noted that each module may be implemented by software or hardware. The latter may be implemented in the following manner, but is not limited thereto. All the modules are located in a same processor; alternatively, the modules are located in different processors in an arbitrary combination.

To facilitate understanding of the technical solutions provided in the embodiments of the present disclosure, the following describes the technical solutions in detail with reference to the embodiments of specific scenarios.

Fig. 7 is a system architecture diagram of an active indoor distribution system for reducing multi-cell interference according to some embodiments of the present disclosure. As shown in Fig. 7, the system includes an indoor positioning module 40, a scheduling module 50 and an aggregation module 60.

The indoor positioning module 40 is mainly configured to determine, according to a Sounding Reference Signal (SRS) reported by a User Equipment (UE), a position number of a cell RRU where the UE is located. The function of the indoor positioning module 40 in this embodiment may also be implemented by the selecting module 10 in the above embodiment.

The scheduling module 50 is configured to determine, according to an output result of the indoor positioning module 40, which pRRUs in the cell send a service channel when scheduling the user UE. The function of the scheduling module 50 in this embodiment may also be implemented by the sending module 20 in the foregoing embodiment.

The aggregation module 60 is configured to copy service data and send the service data out at the corresponding remote aggregation unit (e.g., Pico-Bridge (PB))--> pRRU according to an output result of the scheduling module 50. The function of the aggregation module 60 in this embodiment may also be implemented by the sending module 20 in the foregoing embodiment.

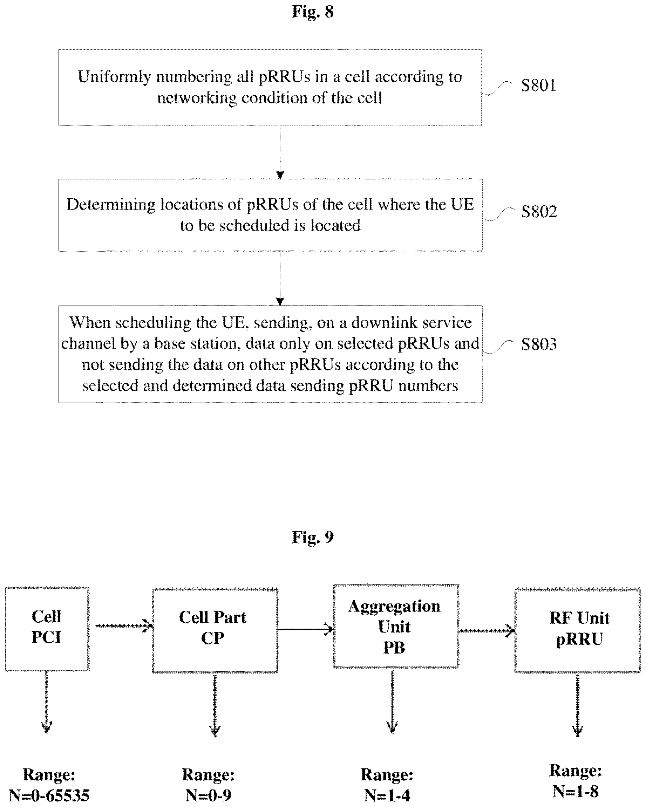

Fig. 8 is a flowchart of a method for reducing inter-cell interference according to some other embodiments of the present disclosure. As shown in Fig. 8, the method includes the following operations S801 to S803.

In operation S801, all pRRUs in a cell are uniformly numbered according to networking condition of the cell.

For example, there are two types of cells in the active indoor distribution system: one is an ordinary cell and the other is a super cell. In order to unify the two types of cells, a Cell Part (CP) concept is introduced. The value of the CP is set to 0 for the ordinary cell, and the value of the CP takes a number from 1 to N for the super cell according to the number N of the composing CPs of the super cell.

Fig. 9 is a schematic structural diagram of composition of a number of a pRRU according to some embodiments of the present disclosure. According to the three-level networking architecture (BBU-->PB-->pRRU) of an active indoor distribution system, the unified numbering of pRRUs under a cell is shown in Fig. 9, and the unified numbering of the pRRUs is composed of four segments: a Physical Cell Identifier (PCI)+a Cell Part (CP)+a Pico-Bridge (PB)+a pico Remote Radio Unit (pRRU), that is, N0N1N2N3.

In this embodiment, the value ranges of the four segments may be the following ranges, for example, the value range of the PCI is 0-65535, the value range of the CP is 0-9, the value range of the PB is 1-4, and the value range of the pRRU is 1-8.

In operation S802, locations of pRRUs of the cell where the UE to be scheduled is located are determined.

For example, according to the SRS signal sent by the terminal, the locations of the pRRUs of the cell where the UE to be scheduled is located are determined.

The UE sends the SRS reference signal; the base station receives the strengths of the SRS reference signal at respective pRRUs in the cell, ranks the strength of the SRS reference signal from high to low, and records and puts the pRRU number corresponding to the strongest strength of the SRS reference signal in the cell into a pRRU list for data sending of the UE to be scheduled.

Other strengths of the SRS reference signal in the cell are compared with the strongest strength of the SRS reference signal, and when a signal strength difference threshold (configurable at the background) is satisfied, the number of the pRRU satisfying the signal strength difference threshold is recorded and put into the pRRU list for data sending of the UE to be scheduled.

The maximum number of the data sending pRRUs of the UE to be scheduled may be configured at the background, and if maximum number is equal to M, the first M pRRUs are selected from the pRRU list for data sending of the UE.

In operation S803, when scheduling the UE, the base station sends, on a downlink service channel, data only on the selected pRRUs and does not send the data on other pRRUs according to the selected and determined data sending pRRU numbers.

In this embodiment, only pRRU(s) near a user are selected to send data according to a location of the user in a cell, thereby reducing the number of pRRUs that send data when scheduling the user, effectively reducing interference of a service channel between cells, and improving user experience.

The embodiments of the present disclosure further provide a computer-readable storage medium. The computer-readable storage medium stores a computer program, wherein the computer program, when running on a processor, causes the processor to execute the operations in any one of the method embodiments.

In an exemplary embodiment, the computer-readable storage medium may include, but is not limited to, any medium that may store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure also provide an electronic apparatus, including a memory and a processor, wherein the memory stores a computer program, and the processor is configured to run the computer program so as to execute the operations in any of the described method embodiments.

In an exemplary embodiment, the electronic apparatus may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that respective modules or operations of the described embodiments of the present disclosure may be implemented by a universal computing device, they may be centralized on a single computing device or distributed on a network composed of multiple computing devices, they may be implemented by program codes executable by a computing apparatus, and thus may be stored in a storage apparatus and executed by the computing apparatus. Furthermore, in some cases, the shown or described operations may be executed in an order different from that described here, or they are made into integrated circuit modules respectively, or multiple modules or operations therein are made into a single integrated circuit module for implementation. In this way, the embodiments of the present disclosure are not limited to any specific combination of hardware and software.

The above description is only the exemplary embodiments of the present disclosure, and is not intended to limit the present disclosure. For those having ordinary skill in the art, the embodiments of the present disclosure may have various modifications and variations. Any modifications, equivalent replacements, improvements and the like made within the principle of the present disclosure shall belong to the protection scope of the present disclosure.

## Claims

1. A method for reducing inter-cell interference, comprising:
selecting, in a cell, multiple radio frequency units within a predetermined range of a location of a User Equipment, UE; and
sending service channel data only on the multiple radio frequency units when scheduling the UE.

2. The method according to claim 1, wherein selecting, in a cell, multiple radio frequency units within a predetermined range of a location of a User Equipment, UE, comprises:
selecting, in the cell according to a strength of a channel sounding reference signal sent by the UE, the multiple radio frequency units within the predetermined range of the location of the UE.

3. The method according to claim 2, wherein selecting, in the cell according to a strength of a channel sounding reference signal sent by the UE, the multiple radio frequency units within the predetermined range of the location of the UE comprises:
acquiring the strengths of the channel sounding reference signal sent by the UE at respective radio frequency units in the cell where the UE is located;
selecting, from the respective the radio frequency units, the multiple radio frequency units based on the strengths of the channel sounding reference signal at the respective radio frequency units, wherein a difference between the strength of the channel sounding reference signal at each of the multiple radio frequency units and a strongest strength of the channel sounding reference signal as acquired satisfies a preset threshold.

4. The method according to claim 3, wherein before selecting, in a cell, multiple radio frequency units within a predetermined range of a location of a User Equipment, UE, the method further comprises:
uniformly numbering the respective radio frequency units in the cell according to a networking condition of the cell where the UE is located, wherein a number of each of the respective radio frequency units is composed of a cell number segment, a cell part number segment, an aggregation unit number segment, and a radio frequency unit number segment.

5. The method according to claim 4, wherein the cell is an ordinary cell or a super cell, and when the cell is the ordinary cell, a value of the cell part number segments is equal to 0.

6. The method according to claim 4, wherein selecting, from the respective the radio frequency units, the multiple radio frequency units comprises:
ranking the strengths of the channel sounding reference signal at the respective radio frequency units in a descending order;
recording and putting the number of a radio frequency unit with the strongest strength of the channel sounding reference signal into a radio frequency unit list for sending the service channel data when scheduling the UE; and
comparing the strongest strength of the channel sounding reference signal with the strength of the channel sounding reference signal at each radio frequency unit other than the radio frequency unit with the strongest strength of the channel sounding reference signal; and when the difference between the strongest strength of the channel sounding reference signal and the strength of the channel sounding reference signal at the radio frequency unit satisfies the preset threshold, recording and putting the number of the radio frequency unit satisfying the preset threshold into the radio frequency unit list for sending the service channel data when scheduling the UE.

7. The method according to claim 6, wherein sending service channel data only on the multiple radio frequency units when scheduling the UE comprises:
when scheduling the UE, copying the service channel data and sending the service channel data only on the radio frequency units whose numbers are in the radio frequency unit list for sending the service channel data.

8. An apparatus for reducing inter-cell interference, comprising:
a selecting module, configured to select, in a cell, multiple radio frequency units within a predetermined range of a location of a User Equipment, UE; and
a sending module, configured to send service channel data only on the multiple radio frequency units when scheduling the UE.

9. The apparatus according to claim 8, wherein the selecting module comprises:
a selecting unit, configured to select, in the cell according to a strength of a channel sounding reference signal sent by the UE, the multiple radio frequency units within the predetermined range of the location of the UE.

10. The apparatus according to claim 8, further comprising:
a numbering module, configured to uniformly number respective radio frequency units in the cell according to a networking condition of the cell where the UE is located, wherein a number of each of the respective radio frequency units is composed of a cell number segment, a cell part number segment, an aggregation unit number segment, and a radio frequency unit number segment.

11. A computer-readable storage medium, wherein the computer-readable storage medium stores a computer program, and the computer program, when being executed by a processor, causes the processor to implement the operations of the method according to any one of claims 1 to 7.

12. An electronic apparatus, comprising a memory, a processor, and a computer program stored on the memory and executable on the processor, wherein the processor, when executing the computer program, implements the operations of the method according to any one of claims 1 to 7.
